(19) Europäisches Patentamt
European Patent Office
Office européen des brevets

(11) EP 0 697 241 A1

(12) **EUROPEAN PATENT APPLICATION**

(43) Date of publication:
**21.02.1996 Bulletin 1996/08**

(51) Int. Cl.[6]: **B01D 53/94**

(21) Application number: **95113120.0**

(22) Date of filing: **21.08.1995**

(84) Designated Contracting States:
**DE FR GB**

(30) Priority: **19.08.1994 JP 195753/94**

(71) Applicant: **TOYOTA JIDOSHA KABUSHIKI KAISHA**
**Aichi-ken 471 (JP)**

(72) Inventors:
- **Matsumoto, Shinichi, c/o Toyota Jidosha K.K. Toyota-shi, Aichi-ken (JP)**
- **Ozawa, Masakuni, c/o Toyota Jidosha K.K. Toyota-shi, Aichi-ken (JP)**

(74) Representative: **Polte, Willi**
**D-85354 Freising (DE)**

# (54) A high heat-resistant copper-alumina composite oxide and a method for purifying exhaust gases

(57) A catalyst for reducing $NO_x$ in automotive exhaust gases, which is formed of a copper-aluminum composite oxide and which exhibits two peaks in the X-ray spectrum corresponding to interplanar spacings of approximately 0.2 nm and approximately 0.28 nm. This composite oxide exhibits high $NO_x$ conversion and superb heat resistance, though its crystal structure is not known yet.

Fig . 2

CALCINATION TEMPERATURE (℃)
1100
1050
1000
990
970
950
930
910
900
875
850
825
800
30
35
40
45
50
UK
UK
2θ (°)

EP 0 697 241 A1

## Description

### BACKGROUND OF THE INVENTION

### Field of the Invention

The present invention relates to a high heat-resistant copper-alumina composite oxide and a method for purifying exhaust gases employing this composite oxide.

### Description of the Related Art

As catalysts for purifying automotive exhaust gases, there have been employed 3-way catalysts so far which oxidize CO and HC and reduce $NO_x$ simultaneously to purifying the exhaust gases. For example, 3-way catalysts have been known widely which comprise a support formed of a heat-resistant material such as cordierite, a catalyst carrier layer formed of gamma ($\gamma$)-alumina and disposed on the support, and a noble metal catalyst ingredient such as platinum (Pt), lead (Pd) and rhodium (Rh) and loaded on the catalyst carrier layer.

The purifying performance of these 3-way catalysts depends greatly on the air-fuel ratio A/F of automotive engines. For instance, when the air-fuel ratio is larger than 14.6, i.e., when the fuel concentration is low (or on the fuel-lean side), the oxygen concentration is high in exhaust gases (herein after simply referred to as "fuel-lean atmospheres"). Accordingly, the oxidation reactions purifying CO and HC are active, but the reduction reactions purifying $NO_x$ are inactive. On the other hand, when the air-fuel ratio is smaller than 14.6, i.e., when the fuel concentration is high (or on the fuel-rich side), the oxygen concentration is low in exhaust gases (hereinafter simply referred to as "fuel-rich atmospheres"). Accordingly, the oxidation reactions are inactive, but the reduction reactions are active.

Moreover, when driving automobiles, especially when driving automobiles in urban areas, the automobiles are accelerated and decelerated frequently. Consequently, the air-fuel ratio varies frequently in the range of from the values adjacent to the stoichiometric point (or the theoretical air-fuel ratio: 14.6) to the fuel-rich side. In order to meet the demand for low fuel consumption under the above-mentioned driving conditions in urban areas, it is necessary to operate automobiles on the fuel-lean side where the air-fuel mixture containing as excessive oxygen as possible is supplied to engines. Hence, it has been desired to develop a catalyst which is capable of adequately purifying $NO_x$ even in exhaust gases on the fuel-lean side.

Japanese Unexamined Patent Publication (KOKAI) No. H1-203609 discloses a method of purifying exhaust gases employing a catalyst formed of copper and zeolite. This copper-zeolite catalyst exhibits excellent $NO_x$ conversion in fuel-lean atmospheres.

The copper-zeolite catalyst, however, shows sharply deteriorated $NO_x$ conversion when placed at high temperatures above 600°C. Therefore, this catalyst cannot be disposed in the exhaust system where exhaust gas temperatures are over 600°C, and it has been desired to improve the heat resistance of this catalyst.

### SUMMARY OF THE INVENTION

The present invention has been developed in view of the aforementioned circumstances. It is therefore an object of the present invention to provide a new high heat-resistant catalyst which substitutes for a copper-zeolite catalyst.

A high heat-resistant copper-alumina composite oxide according to the present invention, which solves the above problem, is formed of a composite oxide of copper and aluminum and shows two peaks in the X-ray diffraction spectrum corresponding to interplanar spacings of approximately 0.2 nanometer and approximately 0.28 nanometer.

A method of purifying exhaust gases according to the present invention is to place, in oxygen-excessive exhaust gases, a copper-alumina composite oxide which is formed of a composite oxide of copper and aluminum, and which shows two peaks in the X-ray diffraction spectrum corresponding to interplanar spacings of approximately 0.2 nanometer and approximately 0.28 nanometer, thereby purifying nitrogen oxides (NOx) in the exhaust gases.

The inventors of the present invention have been studying earnestly and have found that the copper-alumina composite oxide calcined at certain calcination temperature exhibits as excellent $NO_x$ conversion as a copper-zeolite catalyst and is superior in heat resistance. The crystal structure of the copper-alumina composite oxide is not known yet, but the Inventors' researches has revealed that the composite oxide shows two unknown peaks at approximately 2 theta ($\theta$) = 33.5° and approximately 2 theta ($\theta$) = 46.5° in the X-ray diffraction spectra (2 theta ($\theta$) is angle between incident and diffracted x-ray beams).

These two peaks correspond to interplanar spacings d of approximately 0.2 nanometer and approximately 0.28 nanometer, respectively. That is to say, this copper-alumina composite oxide has a crystal structure in which lattice planes are regularly spaced by approximately 0.2 nanometer and approximately 0.28 nanometer.

Since the crystal structure of the composite oxide is not cleared up yet, the structure is identified by specifying interplanar spacing d in the present invention, but it can be identified also by specifying the values of 2 theta (θ) at which two unknown peaks of X-ray diffracted waves are observed.

Some copper-alumina composite oxides do not show both of the two peaks, depending on calcination conditions or the ratios of metal components. These copper-alumina composite oxides rarely exhibit high $NO_x$ conversion and are difficult to be used as catalysts for purifying exhaust gases.

The ratio of copper and alumina in the copper-alumina composite oxide is not particularly limited, but the copper content is preferably 20 mol% or less. When the copper content exceeds 20 mol%, the composite oxide hardly has a crystal structure in which two peaks are observed at approximately 2 theta (θ) = 33.5° and 2 theta (θ) = 46.5° in the X-ray diffraction spectrum, and as a result, the composite oxide has inferior heat resistance and $NO_x$ conversion. The lower limit of the copper content is not determined, because the composite oxide shows these two peaks as long as it contains any copper. However, it is particularly preferable that the copper content is 5 mol% or more, in order to secure desirable heat resistance.

Further, it is preferable to load a metal selected from the group consisting of alkaline earth metals and rare earth elements on the copper-alumina composite oxide of the present invention. This enhances the heat resistance of the copper-alumina composite oxide.

The loading amount of alkaline earth metals and rare earth elements is preferably in the range from 1 to 7 mol%. When this loading amount is less than 1 mol%, the effect of increasing the heat resistance cannot be exerted. On the other hand, when this loading amount exceeds 7 mol%, the composite oxide deteriorates in heat resistance.

The copper-alumina composite oxide of the present invention is produced, for example, by immersing gamma(γ)-alumina in a copper compound aqueous solution and then drying and calcining it. In order to obtain the composite oxide showing the two peaks which correspond to interplanar spacings of approximately 0.2 nanometer and approximately 0.28 nanometer, calcination conditions such as temperature and time must be determined after repeated trial and error. This is because calcination conditions are different depending on the copper content, and the kind and amount of the group consisting of alkaline earth metals and rare earth elements. It must be noted that the composite oxide of the present invention tends to exhibit higher $NO_x$ conversion, as the two peaks have stronger intensity.

The copper-alumina composite oxide of the present invention has following advantages: First, the copper-alumina composite oxide of the present invention exhibits high $NO_x$ conversion in fuel-lean atmospheres. Second, the copper-alumina composite oxide of the present invention has superior heat durability, and therefore, can reduce $NO_x$ in exhaust gases even at elevated temperatures. In summary, the copper-alumina composite oxide of the present invention is extremely useful as a catalyst for purifying $NO_x$ in exhaust gases.

## BRIEF DESCRIPTION OF THE DRAWINGS

Figure 1 illustrates the X-ray diffraction spectra of Cu-La-alumina composite oxides thermally treated at different temperatures according to Example 1.

Figure 2 is a partial enlarged view of Figure 1.

## DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

### Example 1

Commercially available activated alumina powder having a specific surface area of 150 $m^2/g$ and a crystal form of gamma (γ)-alumina was impregnated with a predetermined amount of a lanthanum nitrate aqueous solution having a predetermined concentration. After that, the material was dried at 100°C for 12 hours and calcined at 600°C for 3 hours. Then, the calcined material was pulverized, thereby obtaining La-alumina powder.

This La-alumina powder was impregnated with a predetermined amount of a copper nitrate aqueous solution having a predetermined concentration. After that, the material was dried at 100°C for 12 hours and calcined at 600°C for 3 hours. Then the calcined material was pulverized, thereby obtaining Cu-La-alumina powder. Both the La content and the Cu content were 5 mol%, respectively.

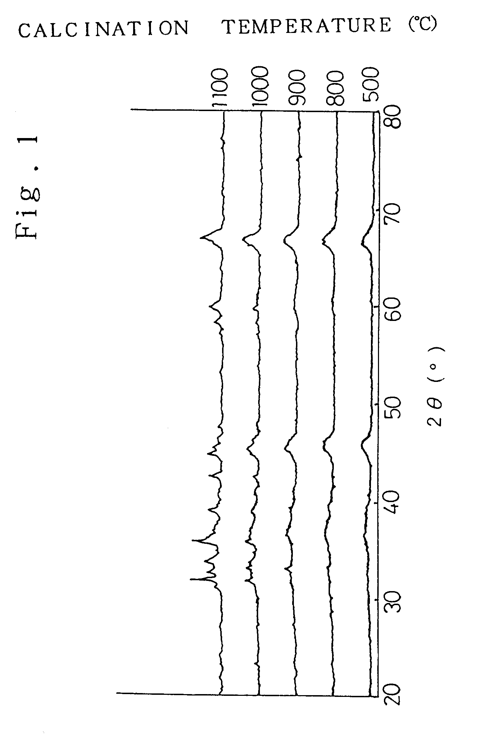

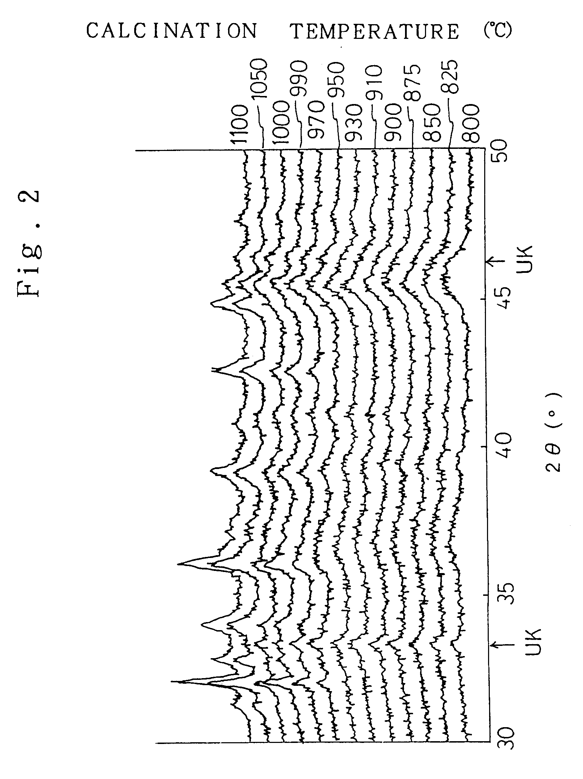

This Cu-La-alumina powder was subjected to heat treatments at 8 levels of temperatures in the range from 500 to 1100°C, thereby obtaining 8 kinds of Cu-La-alumina composite oxides. The X-ray diffraction spectra of these Cu-La-alumina composite oxides are shown in Figures 1 and 2, and the composite oxide composition identified from peaks in the X-ray diffraction spectra are shown in Table 1.

Figure 1 and Table 1 demonstrate that the Cu-La-alumina composite oxides thermally treated at 900°C or more showed unknown peaks (uk) which could not be identified at approximately 2 theta (θ) = 33.5° and approximately 2 theta (θ) = 46.5°. Calculation using Bragg's law (n lambda (λ) = 2d sin theta (θ), where n is a positive integral number, lambda (λ) is a wavelength of incident X-ray beam, d represents an interplanar spacing, and theta (θ) is angle between incident beam and diffracted X-ray beam) indicates that these two peaks correspond to interplanar spacings d of approximately 0.2 nm and approximately 0.28 nm, respectively.

Example 2

Cu-La-alumina composite oxides were prepared in the same manner as in Example 1, except that the Cu content was 10 mol%. Table 1 shows the composition of the Cu-La-alumina composite oxides which were identified from peaks in the X-ray diffraction spectra. The Cu-La-alumina composite oxides thermally treated at 850°C or more exhibited unknown peaks (uk) which could not be identified at approximately 2 theta (θ) = 33.5° and approximately 2 theta (θ) = 46.5°.

Example 3

Cu-alumina composite oxides were prepared in the same manner as in Example 1, except that the lanthanum nitrate aqueous solution was not employed and that the Cu content was 10 mol%. Table 1 shows the composition of these Cu-alumina composite oxides which were identified from peaks in the X-ray diffraction spectra. The Cu-alumina composite oxides thermally treated at 800°C or more exhibited unknown peaks (uk) which could not be identified at approximately 2 theta (θ) = 33.5° and approximately 2 theta (θ) = 46.5°.

Example 4

Ba-alumina composite oxides were prepared in the same manner as in Example 1, except that Ba-alumina powder was prepared by using a barium acetate aqueous solution instead of the lanthanum nitrate aqueous solution and that the Ba content and the Cu content were 5 mol% and 10 mol%, respectively. Table 1 shows the composition of these Cu-Ba-alumina composite oxides which were identified from peaks in the X-ray diffraction spectra. The Cu-Ba-alumina composite oxides thermally treated at 800°C or more also exhibited unknown peaks (uk) which could not be identified at approximately 2 theta (θ) = 33.5° and approximately 2 theta (θ) = 46.5°.

Control A

Cu-La-alumina composite oxides were prepared in the same manner as in Example 1, except that both the Cu content and the La content were 10 mol%, respectively. Table 1 shows the composition of the Cu-La-alumina composite oxides which were identified from peaks in the X-ray diffraction spectra. These Cu-La-alumina composite oxides did not exhibit unknown peaks (uk) which could not be identified.

Control B

Cu-La-alumina composite oxides were prepared in the same manner as in Example 1, except that the Cu content and the La content were 20 mol% and 10 mol%, respectively. Table 1 shows the composition of these Cu-La-alumina composite oxides which were identified from peaks in the X-ray diffraction spectra. These Cu-La-alumina composite oxides did not exhibit unknown peaks (uk) which could not be identified.

Control C

Gamma-alumina powder as it was was subjected to heat treatments in the same manner as in Example 1. Table 1 shows the composition of the alumina thermally treated which were identified from peaks in the X-ray diffraction spectra. Table 1 indicates that they exhibited no unknown peaks (uk) which could not be identified.

Control D

La-alumina composite oxides were prepared in the same manner as in Example 1, except that the composite oxides contained no Cu. Table 1 shows the composition of these La-alumina composite oxides which were identified from peaks in the X-ray diffraction spectra. These La-alumina composite oxides exhibited no unknown peaks (uk) which could not be identified.

Control E

La-alumina composite oxides were prepared in the same manner as in Example 1, except that the La content was 10 mol% and that the composite oxides contained no Cu. Table 1 shows the composition of these La-alumina composite oxides which were identified from peaks in the X-ray diffraction spectra. These La-alumina composite oxides exhibited no unknown peaks (uk) which could not be identified.

TABLE 1

| | | Example 1 | Example 2 | Example 3 | Example 4 | Control A | Control B | Control C | Control D | Control E |
|---|---|---|---|---|---|---|---|---|---|---|
| Composition (mol%) | | Cu 5, La 5 | Cu10, La 5 | Cu10 , La 0 | Cu10 , Ba 5 | Cu10 , La10 | Cu20 , La10 | Cu 0 , La 0 | Cu 0 , La 5 | Cu 0 , La10 |
| Calcination Temperature (℃) | 500 | $\gamma$(s) | $\gamma$(s), CO(s) | $\gamma$(s), CO(s) | $\gamma$(s), CO(s) | $\gamma$(s), CO(s) | $\gamma$(s), CO(s) | $\gamma$(s) | $\gamma$(s) | $\gamma$(s) |
| | 800 | $\gamma$(s), LA(w) | $\gamma$(s), LA(w) | $\gamma$(s), uk(w) | $\gamma$(s), uk(w) | $\gamma$(s), LA(w) | $\gamma$(s), LA(s) | $\gamma$(s), $\theta$(w) | $\gamma$(s) | $\gamma$(s), LA(s), $\theta$(w) |
| | 850 | $\gamma$(s), LA(w) | $\gamma$(s), LA(m), uk(w) | $\gamma$(s), uk(w) | — | LA(s), $\gamma$(m) | LA(s), $\gamma$(m) | $\gamma$(s), $\theta$(w) | $\gamma$(s) | LA(s), $\gamma$(s), $\theta$(w) |
| | 900 | $\gamma$(s), LA(m), uk(w) | $\gamma$(s), LA(m), uk(w) | $\gamma$(s), uk(m) | $\gamma$(s), uk(m) | LA(s), $\gamma$(m) | LA(s), $\gamma$(m), M(w) | $\theta$(s), $\gamma$(m) | $\theta$(s), $\gamma$(m), LA(w) | LA(s), $\gamma$(s), $\theta$(w) |
| | 950 | $\gamma$(s), M(m), LA(m), uk(m) | $\gamma$(s), LA(m), M(m), uk(m) | $\alpha$(s), $\gamma$(w), CA(w), uk(w) | — | M(s), LA(m), $\gamma$(m) | M(s), $\theta$(m), LA(m), $\gamma$(w) | $\theta$(s), $\gamma$(w) | $\theta$(s), LA(w), $\gamma$(w) | LA(s), $\gamma$(m), $\theta$(w) |
| | 1000 | $\gamma$(s), M(m), LA(m), uk(m), $\theta$(w) | M(s), $\gamma$(s), uk(m), LA(w), $\theta$(w) | $\alpha$(s), CA(s) | $\gamma$(s), $\theta$(w), uk(m) | M(s), LA(m), $\theta$(w), $\gamma$(w) | M(s), $\theta$(w), LA(w), $\gamma$(w) | $\theta$(s), $\gamma$(w) | $\theta$(s), LA(w), $\gamma$(w) | LA(s), $\gamma$(m), $\theta$(w) |
| | 1050 | M(s), $\gamma$(s), LA(w), uk(m), $\theta$(w) | M(s), $\gamma$(s), uk(m), LA(w), $\theta$(w), $\alpha$(w) | $\alpha$(s), CA(s), CO(m) | — | M(s), LA(m), $\theta$(w), $\gamma$(w) | M(s), $\alpha$(w), $\theta$(w), LA(w), CA(w) | $\theta$(s), $\alpha$(w) | $\theta$(s), LA(w), $\gamma$(w) | LA(s), $\theta$(m), $\gamma$(w) |
| | 1100 | M(s), $\gamma$(s), $\theta$(w), LA(w), uk(m) | $\alpha$(s), M(s), LA(w), uk(w), CA(w), $\theta$(w), $\gamma$(W) | $\alpha$(s), CA(s), CO(w) | $\theta$(s), $\alpha$(m), uk(w) | M(s), $\theta$(w), LA(w), $\gamma$(w) | M(s), $\alpha$(w), $\theta$(w), LA(w), CA(w) | $\alpha$(s), $\theta$(s) | $\theta$(s), LA(w), $\gamma$(w) | LA(s), $\theta$(m), $\gamma$(w) |

$\alpha$ : $\alpha$-$Al_2O_3$  $\theta$ : $\theta$-$Al_2O_3$  $\gamma$ : $\gamma$-$Al_2O_3$  M : $LaCuAl_{11}O_{19}$  w : Weak  m : Middle  s : Strong
LA : $LaAlO_3$  CA : $CuAl_2O_4$  CO : CuO  uk : unknown

Evaluation On $NO_x$ Conversion

For evaluation on $NO_x$ conversion, 6 kinds of catalysts were prepared which included the Cu-La-alumina composite oxide thermally treated at 1000°C in Example 1, the Cu-La-alumina composite oxide thermally treated at 1000°C in Example 2, two kinds of Cu-alumina composite oxides thermally treated at 500°C and 900°C respectively in Example 3, the Cu-Ba-alumina composite oxide thermally treated at 1000°C in Example 4, and a Cu-zeolite catalyst.

The Cu-zeolite catalyst was prepared by loading copper on ZSM-5 zeolite powder by ion exchange by a known method. The ion exchange ratio of copper to zeolite was approximately 100%.

These 6 kinds of powder were respectively pelletized by a known method, and a model gas at an air/fuel ratio of approximately 22 was flown through the pellets, so as to measure $NO_x$ conversion. The examination results are shown in the column of 'Initial $NO_x$ Conversion' in Table 3. The inlet gas temperature of the model gas was 350°C and the space velocity SV of the model gas was 30000 $h^{-1}$.

Before the above examination, each of the catalysts were subjected to a heat durability test which was conducted by flowing the above model gas through each of the catalysts for 5 hours at 3 levels of temperatures, i.e., 600°C, 800°C and 1000°C, respectively. After that, $NO_x$ conversion was measured on the same conditions as above. The examination results are also shown in the column of '$NO_x$ Conversion After Durability Test' in Table 3.

TABLE 2

| Component | $C_3H_6$ | CO | $H_2$ | $O_2$ | NO | $CO_2$ | $H_2O$ | $N_2$ |
|---|---|---|---|---|---|---|---|---|
| vol% | 0.1 | 0.08 | 0.03 | 6 | 0.04 | 10 | 10 | balance |

TABLE 3

| Catalyst | Composition (mol%) | Calcination Temperature | Initial $NO_x$ Conversion | $NO_x$ Conversion After Durability Test | | |
|---|---|---|---|---|---|---|
| | | | | 600°C | 800°C | 1000°C |
| Example 1 | Cu5 , La5 | 1000°C | 46 % | 45 % | 46 % | 46 % |
| Example 2 | Cu10, La5 | 1000°C | 52 % | 50 % | 51 % | 49 % |
| Example 3 | Cu10 | 500°C | 14 % | - | - | - |
| Example 4 | Cu10 | 900°C | 45 % | 46 % | 44 % | 44 % |
| Example 5 | Cu10, Ba5 | 1000°C | 54 % | 52 % | 52 % | 50 % |
| Cu-zeolite | Cu-ZSM-5 | - | 62 % | 43 % | 5 % | - |

As shown in Table 3, the copper-zeolite catalyst exhibited a high initial $NO_x$ conversion but poor heat resistance. Further, the powder of the Example 3 thermally treated at 500°C did not have a crystal structure in which the two unknown peaks specified in the present invention were observed in the X-ray diffraction spectrum, and accordingly, the powder exhibited an extremely poor $NO_x$ conversion even on the initial state and it is difficult to be used as a catalyst for reducing $NO_x$ in exhaust gases.

On the other hand, each of the composite oxides according to the examples of the present invention except the aforementioned showed two unknown peaks (uk) in the X-ray diffraction spectrum corresponding to interplanar spacings of approximately 0.2 nm and approximately 0.28 nm. Therefore, they exhibited superior $NO_x$ conversion in fuel-lean atmospheres and maintained high $NO_x$ conversion even after the durability test.

The invention may be embodied in other specific forms without departing from the spirit or essential characteristics thereof. The present embodiments are therefore to be considered in all aspects as illustrative and not restrictive, the scope of the invention being indicated by the appended claims rather than by the foregoing description and all changes which come within the meaning and range of equivalence of the claims are therefore intended to be embraced therein.

## Claims

1. A high heat-resistant copper-alumina composite oxide, which is formed of a composite oxide of copper and aluminum, and which shows two peaks in the X-ray diffraction spectrum corresponding to interplanar spacings of approximately 0.2 nanometer and approximately 0.28 nanometer.

2. A method of purifying exhaust gases comprising the steps of:

placing, in oxygen-excessive exhaust gases, a copper-alumina composite oxide which is formed of a composite oxide of copper and aluminum and which shows two peaks in the X-ray diffraction spectrum corresponding to interplanar spacings of approximately 0.2 nanometer and approximately 0.28 nanometer, and;

reducing nitrogen oxides (NOx) in the exhaust gases.

3. The high heat-resistant copper-alumina composite oxide according to claim 1, wherein the copper content is 5 mol% or more.

4. The high heat-resistant copper-alumina composite oxide according to claim 1, wherein a metal selected from the group consisting of alkaline earth metals and rare earth elements is loaded on said copper-alumina composite oxide.

5. The high heat-resistant copper-alumina composite oxide according to claim 4, wherein the loading amount of said alkaline earth metals and said rare earth elements is in the range of from 1 to 7 mol%.

6. The method of purifying exhaust gases according to claim 2, wherein the copper content is 5 mol% or more.

7. The method of purifying exhaust gases according to claim 2, wherein a metal selected from the group consisting of alkaline earth metals and rare earth elements is loaded on said copper-alumina composite oxide.

8. The method of purifying exhaust gases according to claim 7, wherein the loading amount of said alkaline earth metals and said rare earth elements is in the range of from 1 to 7 mol%.

CALCINATION TEMPERATURE (℃)
1100
1000
900
800
500
20
30
40
50
60
70
80
2θ (°)

Fig. 1

CALCINATION TEMPERATURE (℃)
1100
1050
1000
990
970
950
930
910
900
875
850
825
800
30
35
40
45
50
UK
UK
2θ (°)

Fig. 2

European Patent Office

# EUROPEAN SEARCH REPORT

Application Number
EP 95 11 3120

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE-A-43 01 470 (BASF)<br>* claims 1-8 *<br>----- | | B01D53/94 |
| | | | TECHNICAL FIELDS SEARCHED (Int.Cl.6) |
| | | | B01D<br>C01G |

The present search report has been drawn up for all claims

| Place of search | Date of completion of the search | Examiner |
|---|---|---|
| THE HAGUE | 15 December 1995 | Fouquier, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)